# EUROPÄISCHE PATENTSCHRIFT

(11) **EP 0 958 487 B1**
(45) Veröffentlichungstag und Bekanntmachung des Hinweises auf die Patenterteilung: **24.04.2002**
(21) Anmeldenummer: 98906906.7
(22) Anmeldetag: 03.02.1998
(51) Int. Cl.: G01F 1/684, G01F 1/692

(54) **HEISSFILMANEMOMETER**
HOT-FILM ANEMOMETER
ANEMOMETRE A FEUILLE CHAUDE

(30) Priorität: 04.02.1997 AT 7397
(43) Veröffentlichungstag der Anmeldung: 24.11.1999
(73) Patentinhaber: E + E ELEKTRONIK GESELLSCHAFT M.B.H., A-4210 Engerwitzdorf (AT)
(72) Erfinder: MITTER, Helmut, A-4202 Hellmondsöd (AT); TIMELTHALER, Wolfgang, A-4210 Engerwitzdorf (AT)
(74) Vertreter: Hofmann, Ernst
(86) Internationale Anmeldenummer: EP9800561
(87) Internationale Veröffentlichungsnummer: WO9834084

(56) Entgegenhaltungen:
- EP-A- 0 319 871
- WO-A-89/05963
- WO-A-95/02164
- DE-A- 19 511 590
- GB-A- 2 179 748

## Beschreibung

Die Erfindung bezieht sich auf ein Heißfilmanemometer mit kurzer thermischer Zeitkonstante mit wenigstens einem Strömungs- und einem Temperatursensor mit wenigstens einer Membrane, welche mit einem Trägermaterial verbunden ist, wobei die Membrane(n) eine aktive Beschichtung mit temperaturabhängigem elektrischen Widerstand trägt.

Heißfilmanemometer in Dünnschichttechnik werden in großer Zahl in der Automobilindustrie als Massenstrommesser der Ansaugluftmenge von Verbrennungsmotoren verwendet. Um eine entsprechende Meßgenauigkeit und Ansprechgeschwindigkeit sicherzustellen, ist eine kurze thermische Zeitkonstante und eine gute Beständigkeit gegen aggressive Umgebungsbedingungen gefordert.

Vor allem um kurze thermische Zeitkonstanten zu realisieren ist es bekannt, derartige Heißfilmanemometer auf dünnen Gläsern aufzubauen, die eine Stärke ca. 150 µm und darüber besitzen. Wenn derartige Heißfilmanemometer bei konstanter Übertemperatur betrieben werden, lassen sich Zeitkonstanten des Systems von ca. 20 msec. erreichen. Im Betrieb bei Übertemperatur wird dabei die Temperatur bzw. der Widerstand des Sensors konstant gehalten, was durch die Nachführung des Sensorstromes erreicht wird. Der Sensorstrom dient gleichzeitig als Meßgröße für die Duchflußrate der Ansaugluft. Pulsationen im Ansaugtrakt des Motors und etwaige Strömungsumkehr führen in Kombination mit einer Mittelung über die nichtlineare Charakteristik eines Heißfilmanemometers zu Fehlmessungen, die bei modernen Motormanagementsystemen nicht mehr akzeptiert werden können. Ziel ist es deshalb, ein Heißfilmanemometer zu realisieren, das eine deutlich geringere thermische Zeitkonstante aufweist und in Kombination mit dem Konstant-Übertemperaturbetrieb eine Ansprechzeit des Systems im 1 msec-Bereich ermöglicht.

Aus der WO 94/08212 ist bereits ein kalorimetrischer Durchflußsensor sowie ein Verfahren zu seiner Herstellung bekannt geworden, bei welcher ein Siliziumhalbleitergrundkörper bzw. Wafer mit einer gegen Ätzen beständigen Siliziumnitridbeschichtung versehen ist. Um die thermische Zeitkonstante zu reduzieren, wird bei diesem bekannten Durchflußsensor der Siliziumgrundkörper bis zur Siliziumnitridschicht bereichsweise herausgeätzt, so daß Fenster entstehen, in welchen die gegen Ätzen beständige Siliziumnitridschicht erreicht wird. In Folge wird der freigelegte Bereich der Siliziumnitridschicht mit dem aktiven Sensormaterial im Vakuum beschichtet. Bedingt durch die hohe thermische und mechanische Belastung läßt sich beim Ätzen des Siliziums keine beliebig dünne und beliebig große Membran im Bereich der Fenster realisieren und somit verbleibt auch für die darauf anzuordnende aktive Beschichtung lediglich ein relativ kleiner Flächenbereich in der Größenordnung einiger (100µm)². Dies wiederum ist insofern nachteilig, als dann bereits geringe Verschmutzungen dieses Flächenbereiches zu Fehlmessungen führen können. Die Materialstärke wird im Bereich der freigeätzten Fenster durch das nachträgliche Auftragen von aktiver Beschichtung mit temperaturabhängigem elektrischen Widerstand wiederum erhöht, wodurch die thermische Trägheit wiederum unerwünscht ansteigt.
Bedingt durch die maximal erzielbaren Membranflächen, auf welchen die aktive Beschichtung mit temperaturabhängigem elektrischen Widerstand bei den bekannten Ausbildungen mit Silizium-Grundkörpern aufgetragen ist, hat eine Verschmutzung sehr rasch Fehlmessungen zur Folge, wobei mit den bisher bekannten kalorimetrischen Durchflußsensoren nur begrenzte Flächen mit geringer Materialstärke realisiert werden konnten.

Aus der WO 89/05963 ist ferner ein gattungsgemäßes Heißfilmanemometer bekannt, bei dem auf einer dünnen Silizium-Membran eine aktive Beschichtung aus Molybdän, Nickel oder Platin als Temperatursensor verwendet wird. Als problematisch erweisen sich bei der vorgeschlagenen Anordnung jedoch die resultierenden Unterschiede in den thermischen Ausdehnungskoeffizienten, die im Messbetrieb zu einer Beschädigung des Heißfilmanemometers führen können.

Die Erfindung zielt nun darauf ab, ein mechanisch stabiles Heißfilmanemometer der eingangs genannten Art mit kleinerer thermischer Zeitkonstante und geringerer Anfälligkeit für Verschmutzungen zu schaffen. Es sollen demzufolge Membranen mit einer Stärke vorzugsweise unterhalb von 25 µm herstellbar werden, wodurch die thermische Trägheit verringert und die thermische Zeitkonstante verkürzt werden soll. Gefordert ist desweiteren eine möglichst einfache Fertigung des Heißfilmanemometers.

Diese Aufgaben werden gelöst durch ein Heißfilmanemometer mit den Merkmalen im kennzeichnenden Teil des Anspruches 1.

Vorteilhafte Ausführungsformen des erfindungsgemäßen Heißfilmanemometers ergeben sich aus den Maßnahmen in den von Anspruch 1 abhängigen Ansprüchen.

Zur Lösung der oben genannten Aufgaben ist das erfindungsgemäße Heißfilmanemometer im wesentlichen dadurch gekennzeichnet, daß das Material der aktiven Beschichtung einen Temperaturausdehnungskoeffizienten (αₜ) aufweist, der kleiner ist als der Temperaturausdehnungskoeffizient (αₜ) des Trägermateriales und und daß wenigstens der oder die Strömungssensor(en) auf der bzw. den Membrane(n) angeordnet ist (sind).

Vorzugsweise weist das Trägermaterial einen Temperaturausdehnungskoeffizienten (αₜ) auf, welcher nicht zu stark von den Temperaturausdehnungskoeffizienten (αₜ) des Materials der Membrane(n) sowie der aktiven Beschichtung abweicht; insbesondere sollten die Differenzen zwischen den αₜ-Werten von Trägermaterial einerseits und dem Material der Membrane(n) oder dem Material der aktiven Beschichtung andererseits möglichst kleiner sein als bei der Verwendung von Silizium als Trägermaterial. Hierbei sind als Membranmaterialien an sich bekannte hochfeste Membranwerkstoffe, wie z.B. Si₃N₄ (Silizium-Nitrid), SiO₂, SiC (Silizium-Carbid) und/oder SiOₓ vorgesehen.

Dadurch, daß das Trägermaterial unter den erfindungsgemäßen, oben diskutierten Gesichtspunkten gewählt wird, ist es nunmehr möglich, wesentlich größere Flächen einer dünnen Membrane auszubilden, welche auch bei raschem Temperaturwechsel nicht thermisch überlastet werden können. Die Größenordnung der damit erzielbaren Membranflächen liegt dabei im Bereich von 1mm x 3-4mm. Die erfindungsgemäß erzielbare, größere Fläche führt hierbei in erster Linie zu einer geringeren Verschmutzungsgefahr und zu einer Verringerung der Fehlmessungen bei Verschmutzung.

Gleichzeitig führt diese größere Fläche auch dazu, daß der temperaturabhängige elektrische Widerstand der aktiven Beschichtung in diesem Flächenbereich exakt auf die gewünschten Werte getrimmt werden kann, da eine größere Fläche zur Aufbringung der aktiven Beschichtung zur Verfügung steht. Im Fall kleinerer Membran-Flächen gelingt dies nur sehr schwer reproduzierbar.

Die geringen Unterschiede im thermischen Ausdehnungskoeffizienten führen bei geringerer Materialstärke im Bereich der Membran desweiteren zu hinreichender Festigkeit, so daß sich insgesamt eine wesentlich größere Meßgenauigkeit bei besserer Reproduzierbarkeit der Meßergebnisse ergibt. Mit Vorteil wird als Trägermaterial Glas eingesetzt, wobei bevorzugt photostrukturierbares Glas verwendet wird, welches insbesondere eine einfache Herstellung eines derartigen Heißfilmanemometers ermöglicht.

Gemäß einer weiteren bevorzugten Ausbildung ist wenigstens ein zusätzlich zu dem oder den Strömungssensorflächen vorgesehener Temperatursensor vorgesehen, welcher vorzugsweise außerhalb der Membranbereiche am Trägerkörper angeordnet ist. Für die Funktion des Heißfilmanemometers werden üblicherweise zwei temperaturabhängige Widerstände eingesetzt, wobei ein Widerstand als Temperatursensor und ein weiterer als Strömungssensor betrieben wird, welche gemeinsam in einer Brückenschaltung im Konstant-Übertemperaturbetrieb betrieben werden.

Die Widerstände bzw. aktiven Beschichtungen können aus Platin, Nickel, Molybdän oder anderen Metallen mit hoher Temperaturabhängigkeit des elektrischen Widerstands realisiert werden, wobei diese aktive Beschichtungen in konventioneller Weise auf einem Trägermaterial aufgebracht werden. Das Trägermaterial und die aktive Metallschicht können hierbei vor dem Freiätzen der Membran entsprechend konfektioniert werden, wobei eine Trimmung der Elemente auf einen Sollwiderstand in bekannter Art und Weise vorgenommen werden kann, indem etwa die aufgebrachten Leiterbahnwindungen der aktiven Beschichtung auf die passende Länge hin dimensioniert werden. Die Sensorelemente, d.h. Temperatur- und Strömungssensor, können prinzipiell gepaart aufgebaut werden, so daß entsprechend der verwendeten Brückenschaltung der Temperatursensor mit seinem Widerstandswert zum aktuellen Widerstandswert des Strömungssensors dazugetrimmt wird. Die Sensorelemente können möglichst nebeneinander auf dem gemeinsamen Substrat ausgebildet werden, wobei durch die gepaarte Verarbeitung sich Fertigungsstreuungen beim fertigen Element wesentlich weniger auswirken und der Aufwand für die Weiterverarbeitung in der Brückenschaltung beträchtlich verringert werden kann.

Für die Abscheidung der aktiven Metallschicht mit temperaturabhängigem Widerstand eignet sich unter anderem das PVD-Verfahren, wobei die anschließende Strukturierung der aktiven Metallschicht photolitographisch und das Trimmen in bekannter Art und Weise mittels Laser erfolgen können. Um in der Folge einen Schutz gegen aggressive Umgebungsbedingungen sicherzustellen, ist mit Vorteil die Ausbildung so getroffen, daß die aktive Schicht eine Schutzschicht, beispielsweise eine Polyimidschutzschicht gegebenenfalls gemeinsam mit einer anorganischen Schutzschicht, trägt.

Dadurch, daß nun die Sensorelemente vollständig am Tragkörper bzw. Trägermaterial fertiggestellt werden können, bevor die entsprechende Ausbildung der Membran durch rückseitiges Frei- oder Wegätzen des Trägermaterials vorgenommen wird, lassen sich kombinierte Schichtstärken einer Membran mit aktiver Beschichtung und gegebenenfalls Abdeckschicht gegen aggressive Umgebungsbedingungen realisieren, welche weit unter den bei einer anderen Verfahrensweise erzielbaren Schichtstärken liegen.

Ein Verfahren zur Herstellung eines derartigen Heißfilmanemometers ist dadurch gekennzeichnet, daß zunächst ein Tragkörper bzw. das entsprechende Trägermaterial mit dem Material der Membrane(n) und anschließend mit der aktiven Beschichtung mit temperaturabhängigem Widerstand versehen wird. Die Konfektionierung des aktiven Bereiches in Form der Leiterbahnstrukturierung sowie des Trimmens dieser Leiterbahnbereiche auf die gewünschten Widerstandswerte erfolgt vorteilhafterweise anschließend. Daraufhin wird unterhalb der als Strömungssensor sowie gegebenenfalls unterhalb der als Temperatursensor geschalteten aktiven Beschichtung das Material des Tragkörpers bis zur gewünschten Materialstärke der Membrane abgetragen bzw. weggeätzt. Das nachträgliche Freiätzen der Membran durch Abtragen des Materials des Tragkörpers kann bis zur gegen Ätzen resistenten Schicht aus dem Material der Membran, wie beispielsweise Siliziumnitrid, Siliziumkarbid oder dergleichen vorgenommen werden, wobei eine nachträgliche Bearbeitung und ein weiteres Trimmen auf die gewünschten Sollwiderstandswerte nicht mehr erforderlich ist. Insgesamt ergibt sich auf diese Weise eine wesentlich geringere Materialstärke im Bereich der Membran, wobei durch das erläuterte Verfahren die gewünschten Gesamtschichtstärken unterhalb von 25µm mit hinreichender Festigkeit bei gleichzeitig großer Fläche der Membran realisiert werden können.

Vor dem Ätzen kann hierbei ein photolithographisches Strukturieren der aktiven Schicht sowie ein Trimmen der aktiven Beschichtung mittels Laser erfolgen, indem die Leiterbahnen auf die erforderlichen Längen gekürzt werden. Mit Vorteil kann hierbei so vorgegangen werden, daß der Widerstandswert des Temperatursensors in Abhängigkeit von der verwendeten Brückenschaltung zum Stömungssensor dazu getrimmt bzw. gepaart wird. Abschließend kann noch eine Schutzschicht auf dem Heißfilmanemometer aufgebracht werden.

Bevorzugt wird das Verfahren so durchgeführt, daß das Material des Tragkörpers bis zur Membranschicht durch Photolithographie und selektives Ätzen abgetragen wird.

Die vorliegende Erfindung wird nachfolgend anhand eines in der Zeichnung schematisch dargestellten Ausführungsbeispieles näher erläutert. Gleichzeitig wird hierbei ein Verfahren zur Herstellung eines derartigen Heißfilmanemometers erläutert.

Hierbei zeigt
- Figur 1: einen Querschnitt durch ein Ausführungsbeispiel des erfindungsgemäßen Heißfilmanemometers;
- Figur 2: eine Draufsicht im Sinne des Pfeiles II der Figur 1, wobei Figur 1 einen Schnitt nach der Linie I/I der Figur 2 darstellt.

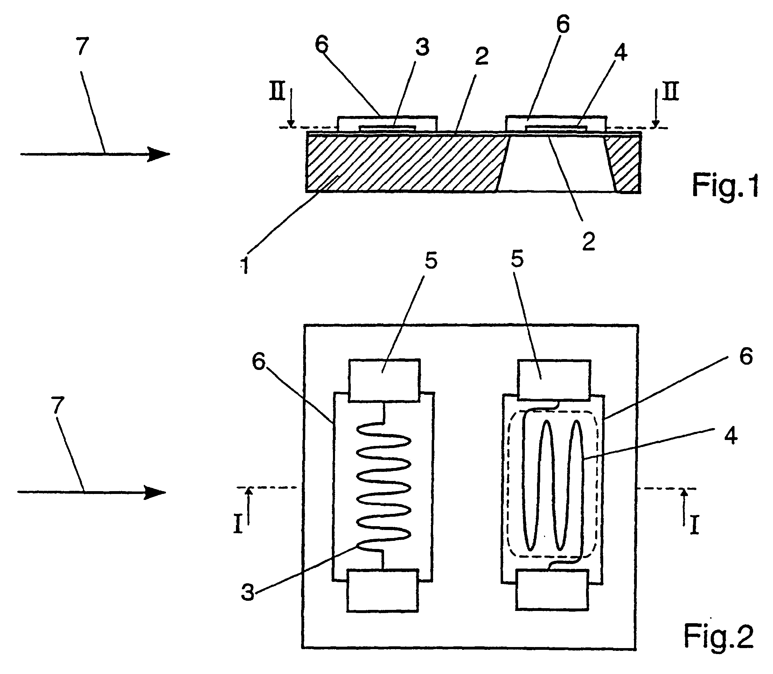

In Figur 1 ist ein Tragkörper 1, bestehend aus dem Trägermaterial Glas, ersichtlich, auf welchen bei der Herstellung zunächst eine Beschichtung 2 aufgebracht wird, welche letztlich als Membran dient. In eine möglichen Ausführungsform weist der Tragkörper dabei etwa eine Dicke von ca. 0,5mm auf. Die Beschichtung 2 bzw. Membran besteht in diesem Ausführungsbeispiel aus insgesamt drei - im einzelnen nicht gezeigten - Teilschichten, wobei auf das Trägermaterial bzw. den Tragkörper 2 eine erste Siliziumcarbid-Schicht (SiC) aufgebracht ist; es folgt eine SiliziumnitridSchicht (Si₃N₄), auf der wiederum eine zweite Siliziumcarbid-Schicht (SiC) angeordnet ist. Die Dicke der Beschichtung 2, die in dieser Ausführung aus den drei genannten Teilschichten besteht, weist etwa eine Dicke von ca. 10-15µm auf und liegt allgemein in der Größenordnung zwischen 5-50µm. Ohne Probleme können derart jedoch die bevorzugten Schichtstärken von unter 25µm realisiert werden. Als Verfahren zur Aufbringung der Beschichtung 2 auf dem Tragkörper 1 eignen sich beispielsweise bekannte CVD-Verfahren.

Auf die Beschichtung 2 bestehend aus den Siliziumnitrid- und Siliziumkarbid- Teilschichten wird in der Folge eine aktive Metallschicht aufgebracht, was etwa über bekannte PVD-Verfahren efolgen kann. Übliche Dicken dieser aktiven Metallschicht liegen im Bereich 1µm. Als aktive Metallschicht können hierbei Materalien eingesetzt werden, die eine starke Temperaturabhängigkeit des elektrischen Widerstandes aufweisen, wie etwa Platin (Pt), Molybdän (Mo) oder Nickel (Ni). Die aufgebrachte Metallschicht wird daraufhin über bekannte photolithographische Techniken strukturiert, so daß letztlich nur in den gewünschten Bereichen 3, 4 des Tragkörpers 1 Leiterbahnwindungen aus dem Material der Metallschicht verbleiben. Die in diesen Bereichen 3 und 4 aufgebrachten Leiterbahnwindungen werden desweiteren noch über übliche Laser-Trimm-Verfahren auf den gewünschten Widerstandswert getrimmt, der in den entsprechenden Auswerte-Brückenschaltungen erforderlich ist. Hierbei werden beim Laser-Trimmen die Leiterbahnwindungen in diesen Bereichen 3,4 auf die dem gewünschten Widerstand entsprechende Länge gekürzt.
Die Metallschicht 4 wird in der Folge als Strömungssensor und die Metallschicht 3 als Temperatursensor in einer nicht näher dargestellten, dem Fachmann bekannten Brückenschaltung eingesetzt. Die Strukturierung der Metallschichten bzw. aktiven Schichten 3, 4 ist schematisch in der Draufsicht entsprechend der Figur 2 ersichtlich. Mit 5 sind jeweils die zu den Metallschichten 3, 4 gehörigen elektrischen Kontakte der beiden Sensoren bezeichnet, welche mit der Brückenschaltung verbunden werden.

Auf die aktiven Schichten 3, 4 wird schließlich bei der Herstellung noch eine geeignete Schutzschicht 6 aufgetragen. Hierfür kommt beispielsweise eine bekannte Polyimid-Schutzschicht und/oder eine anorganische Schutzschicht in Frage. Typische Dicken derartiger Schutzschichten 6 betragen etwa 5µm.

Nach dem beschriebenen Auftragen des Materials der Membran 2, der aktiven Beschichtung 3, 4 mit temperaturabhängigem elektrischen Widerstand sowie der Schutzschicht 6 wird anschließend zumindest im Bereich der als Strömungssensor geschalteten bzw. genutzten metallischen Beschichtung 4 der Tragkörper 1 nach einem Photostrukturierungsschritt freigeätzt, so daß auf der Tragkörper-Unterseite ein Fenster zur Membran 2 ausgebildet wird.
Im Ausführungsbeispiel der Figuren 1 und 2 ist lediglich derjenige Bereich 4 der aktiven Beschichtung auf der dünnen Membran angeordnet, der als Strömungssensor genutzt wird. Grundsätzlich kann im Rahmen der vorliegenden Erfindung jedoch selbstverständlich vorgesehen werden, auch den als Temperatursensor genutzten Bereich 3 auf einer entsprechend dünnen Membran anzuordnen.

Wie bereits oben erwähnt wird als Material des Tragkörpers 1 vorzugsweise photostrukturierbares Glas verwendet, das im vorher belichteten Bereich des Strömungssensors 4 durch einen Ätzprozess mittels Flußsäure bis zur Membran 2 entfernt wird. Die Membran 2 dient dabei als Ätzstop in vertikaler Richtung. Ein hierzu geeignetes photostrukturierbares Glas-Material wird etwa von der Firma SCHOTT Glaswerke, Mainz unter der Bezeichnung FOTURAN™ vertrieben. Bezüglich weiterer Einzelheiten dieses Materiales und dessen Verarbeitungsmöglichkeiten sei beispielsweise auch auf die Druckschrift Nr. 10095 d 06942.0 der Firma SCHOTT verwiesen.

Mit Rücksicht auf den Umstand, daß alle Prozeßschritte vor dem Entfernen des Trägermaterials zumindest im Bereich des Strömungssensors 4 auf der vollen Trägermaterialschichtstärke des Tragkörpers 1 vorgenommen wurden, ergibt sich die Möglichkeit, hier auch bei sehr dünner Membranschicht 2 und dünnen aktiven Beschichtungen 3, 4 eine hinreichende mechanische Stabilität und damit eine überaus kurze thermische Zeitkonstante des Heißfilmanemomters zu realisieren. Die mechanische Stabilität wird hierbei durch den Verbund aus dem Material der Membran 2 und der aktiven Beschichtung 4 mit temperaturabhängigem elektrischen Widerstand beim Ätzen des Grundkörpers bzw. Tragkörpers erreicht, so daß mit sehr geringen Gesamtschichtstärken ein überaus empfindliches Heißfilmanemometer hergestellt werden kann.

Letztlich ist die gewünschte mechanische Stabilität des erfindungsgemäßen Heißfilmanemomters auf die bereits oben erwähnte Wahl von Materialien mit im wesentlichen ähnlichen bzw. übereinstimmenden thermischen Temperaturausdehnungskoeffizienten αₜ zurückzuführen. Im Fall von nicht komplett zu vermeidenden Differenzen zwischen den thermischen Temperaturausdehnungskoeffizienten des Tragkörper-Materiales einerseits und den Materiaien der Membran sowie der aktiven Beschichtung andererseits ist erfindungsgemäß zumindest zu gewährleisten, daß der αₜ - Wert der aktiven Beschichtung zumindest kleiner als der des Tragkörper-Materiales ist, vorzugsweise auch kleiner als der des Membran-Materiales.

So weist etwa das als bevorzugtes Material des Tragkörpers 1 verwendete photostrukturierbare Glas FOTURAN™ einen Temperaturausdehnungskoeffizienten bzw. thermischen Längenausdehnungskoeffizienten αₜ ≈ 8,6 * 10⁻⁶/°C auf. Im Fall einer aktiven Beschichtung 4 aus Platin (Pt) ist der entsprechende - ausdehnungskoeffizient αₜ ≈ 6 * 10⁻⁶/°C, während der Wert für Molybdän etwa bei αₜ ≈ 5,5 * 10⁻⁶/°C liegt.

Die Differenzen Δ_{BT} = (α_{t, Beschichtungsmaterial} - α_{t,Trägermaterial}) betragen für die beiden Trägermaterialien FOTURAN™ und Silizium mit den unterschiedlichen Beschichtungsmaterialien Pt und Mo im Vergleich:

| Trägermaterial | Trägermaterial |
|---|---|
| FOTURAN (αₜ ≈ 8,6 * 10⁻⁶/°C) | Si (αₜ≈ 2,7 * 10⁻⁶/°C) |

| Beschichtungsmaterial | Beschichtungsmaterial |
|---|---|
| Pt: Δ_{BT} = - 2,6 * 10⁻⁶/°C | Δ_{BT} = + 3,3 * 10⁻⁶/°C |
| Mo: Δ_{BT} = - 3,1 * 10⁻⁶/°C | Δ_{BT} = + 2,8 * 10⁻⁶/°C |

Aus diesen Zahlenangaben ist numehr explizit ersichtlich, daß im Fall der erfindungsgemäßen Verwendung des Trägermateriales FOTURAN™ mit dem angegebenen Ausdehnungskoeffizienten αₜ im Fall der beiden Beschichtungsmaterialien sichergestellt ist, daß der Ausdehnungskoeffizient αₜ des Beschichtungsmateriales erfindungsgemäß kleiner als derjenige des Trägermateriales ist. Wie bereits oben erwähnt, ergibt sich dadurch im Fall der Erwärmung der aktiven Beschichtung im Meßbetrieb, daß auf die Membranflächen Druckspannungen wirken, was fertigungstechnisch vorteilhaft ist. Dementsprechend können auch wie gewünscht größere Membranflächen mit hinreichender Festigkeit ausgebildet werden.
Desweiteren ist aus dem Vergleich ersichtlich, daß der Betrag der Differenz der Ausdehnungskoeffizienten αₜ zumindest im Fall des Beschichtungsmateriales Pt bei der Wahl des Trägermateriales FOTURAN™ kleiner ist als im Fall des Trägermateriales Silizium.

Bei der zwischen der aktiven Beschichtung 4 und dem Tragkörper 1 vorgesehenen Membran 2, die im gezeigten Ausführungsbeispiel aus mehreren Teilschichten besteht, kann durch gezielte Wahl von Prozeßparametern bei der Aufbringung der Temperaturausdehnungskoeffizient αₜ des Membranmateriales derart eingestellt werden, daß dieser ebenfalls in einer ähnlichen Größenordnung liegt wie die thermischen Temperaturausdehnungskoeffizienten αₜ der beiden angrenzenden Materialien, d.h. der aktiven Beschichtung 4 und des Tragkörpermateriales. Hierbei erweist es sich grundsätzlich als einfacher, eine Anpassung des Temperaturausdehnungskoeffizienten αₜ der Mebranschicht an den -ausdehnungskoeffizienten αₜ des Trägermateriales FOTURAN™ vorzunehmen als etwa eine Anpassung an das Trägermaterial Silizium.

Die Anströmung mit Medium erfolgt im Sinne des Pfeiles 7 bevorzugt an der die aktive Beschichtung tragenden Oberseite des erfindungsgemäßen Heißfilmanemometers, wobei zum Schutz gegen aggressive Umgebungsbedingungen hier zusätzlich eine Schutzschicht aufgetragen sein kann, welche selbst wiederum dazu führt, daß die Gesamtschichtstärke gering gewählt werden kann, da auch diese Schutzschicht zur Tragfunktion der Membran beiträgt. In einem derartigen Fall wird die Schutzschicht bevorzugt gleichfalls vor dem Ätzen des photostrukturierbaren Grund- bzw. Tragkörpers aufgebracht, um die Vorteile bezüglich der hohen Festigkeiten in diesem Prozeßstadium besser nützen zu können. Die hohe Temperaturwechselbeständigkeit resultiert wie bereits erwähnt aus den geringen Unterschieden der Temperaturausdehnungskoeffizienten des Tragkörpers 1 und der Membrane 2.

Um die oben erwähnte Anströmung des erfindungsgemäßen Heißfilmanemometers auf der Oberseite sicherzustellen, erweist es sich desweiteren als vorteilhaft, wenn das entsprechende Heißfilmanemometer z.B. im Ansaugkanal eines Verbrennungsmotors zusammen mit einem strömungsbeeinflußenden Bauteil angeordnet ist. Dieses, geeignet dimensionierte strömungstechnische Bauteil gewährleistet, daß eine Anströmung auf der Oberseite resultiert. In Bezug auf ein geeignetes, derartiges Bauteil sei etwa auf die DE 196 36 095 verwiesen.

Neben der beschriebenen Ausführungsform des erfindungsgemäßen Heißfilmanemometers existieren selbstverständlich alternative Varianten, die ebenfalls im Rahmen der erfindungsgemäßen Überlegungen realisiert werden können. Insbesondere können durchaus auch andere Materialkombinationen eingesetzt werden, die die erwähnten Bedingungen hinsichtlich ihrer thermischen Ausdehnungskoeffizienten erfüllen, also insbesondere, daß das aktive Beschichtungsmaterial einen kleineren thermischen Ausdehnungskoeffizienten aufweist als das Trägermaterial.

## Patentansprüche

1. Heißfilmanemometer mit kurzer thermischer Zeitkonstante mit wenigstens einem Temperatursensor und wenigstens einer Membrane, welche mit einem Trägermaterial verbunden ist, wobei die Membrane(n) eine aktive Beschichtung mit temperaturabhängigem elektrischen Widerstand trägt (tragen) und unterhalb des Membranbereiches das Trägermaterial entfernt ist,
**dadurch gekennzeichnet, daß**
- das Material der aktiven Beschichtung (3, 4) einen Temperaturausdehnungskoeffizienten (αₜ) aufweist, der kleiner ist als der Temperaturausdehnungskoeffizient (αₜ) des Trägermateriales und
- daß auf der Membran wenigstens ein bzw. auf den Membranen jeweils wenigstens ein Strömungssensor angeordnet ist.

2. Heißfilmanemometer nach Anspruch 1, **dadurch gekennzeichnet, daß** die Differenz der αₜ-Werte des Trägermaterials und des Materials der aktiven Beschichtung (3, 4) geringer ist als die Differenz der αₜ-Werte von Si und des Materials der aktiven Beschichtung.

3. Heißfilmanemometer nach Anspruch 1, **dadurch gekennzeichnet, daß** das Trägermaterial aus Glas, insbesondere photostrukturierbarem Glas, besteht.

4. Heißfilmanemometer nach Anspruch 1, **dadurch gekennzeichnet, daß** wenigstens ein zusätzlich zu dem oder den Strömungssensorflächen vorgesehener Temperatursensor außerhalb der Membranen am Trägerkörper (1) angeordnet ist.

5. Heißfilmanemometer nach einem der Ansprüche 1-4, **dadurch gekennzeichnet, daß** die aktive Schicht (3, 4) eine Schutzschicht (6), insbesondere eine Polyimidschutzschicht gegebenenfalls gemeinsam mit einer anorganischen Schutzschicht, trägt.

## Claims

1. Hot-film anemometer with a short thermal time constant, having at least one temperature sensor and at least one membrane which is connected to a support material, wherein the membrane(s) bears (bear) an active coating with temperature-dependent electrical resistance and is (are) disposed at a distance below the membrane region of the support material,
**characterised in that**
- the material of the active coating (3, 4) has a coefficient of thermal expansion (aₜ) which is lower than the thermal expansion coefficient (at) of the support material and
- **in that** at least one flow sensor is disposed on the membrane or at least one flow sensor is disposed on each of the membranes.

2. Hot-film anemometer according to claim 1, **characterised in that** the difference between the aₜ values of the support material and the material of the active coating (3, 4) is lower than the difference between the aₜ values of Si and the material of the active coating.

3. Hot-film anemometer according to claim 1, **characterised in that** the support material consists of glass, especially photostructurable glass.

4. Hot-film anemometer according to claim 1, **characterised in that** at least one temperature sensor, provided in addition to the flow sensor surface or surfaces, is disposed outside the membranes on the carrier body (1).

5. Hot-film anemometer according to one of claims 1 to 4, **characterised in that** the active coating (3, 4) bears a protective coating (6), especially a polyimide protective coating possibly together with an inorganic protective coating.

## Revendications

1. Anémomètre à feuille chaude, à constante de temps thermique courte, comportant au moins un capteur de température et au moins une membrane, qui est liée à un matériau-support, la (les) membrane(s) portant un revêtement actif dont la résistance électrique varie avec la température et le matériau-support étant supprimé sous la partie membrane, **caractérisé en ce que**
- le matériau du revêtement (3, 4) actif présente un coefficient de dilatation thermique (αₜ) qui est inférieur au coefficient de dilatation thermique (αₜ) du matériau-support et
- **en ce que** sur la membrane est disposé au moins un capteur d'écoulement, voire sur chacune des membranes est disposé au moins un capteur d'écoulement.

2. Anémomètre à feuille chaude selon la revendication 1, **caractérisé en ce que** la différence des valeurs (αₜ) du matériau-support et du matériau du revêtement (3, 4) actif est inférieure à la différence des valeurs (αₜ) du Si et du matériau du revêtement (3, 4) actif.

3. Anémomètre à feuille chaude selon la revendication 1, **caractérisé en ce que** le matériau-support est du verre, en particulier du verre structurable par un procédé photographique.

4. Anémomètre à feuille chaude selon la revendication 1, **caractérisé en ce qu'**au moins un capteur de température prévu en plus de la ou des surfaces formant capteur d'écoulement est disposé en dehors des membranes sur le corps support (1).

5. Anémomètre à feuille chaude selon une des revendications 1 à 4, **caractérisé en ce que** la couche (3, 4) active porte une couche de protection (6), en particulier une couche de protection de polyimide, le cas échéant combinée à une couche de protection inorganique.
